# EUROPEAN PATENT APPLICATION

(11) **EP 4 030 190 A1**
(43) Date of publication of application: **20.07.2022**
(21) Application number: 21214879.5
(22) Date of filing: 15.12.2021
(51) Int. Cl.: G01S 7/539, G01S 15/06, G01S 15/87, G05D 1/02

(54) **OBSTACLE POSITION CORRECTION METHOD AND SYSTEM, COMPUTER DEVICE, AND STORAGE MEDIUM**

(30) Priority: 18.01.2021 CN 202110064486
(71) Applicant: Guangzhou Xiaopeng Autopilot Technology Co., Ltd., Guangzhou, Guangdong 510000 (CN)
(72) Inventor: Qin, Han, Guangzhou (CN); Chen, Shengjun, Guangzhou (CN); Jiang, Shaofeng, Guangzhou (CN); Zhang, Hong, Guangzhou (CN); Feng, Kai, Guangzhou (CN)
(74) Representative: Habermann, Hruschka & Schnabel

(57) **Abstract**

Provided are an obstacle position correction method, an obstacle position correction system, a computer device and a storage medium. The method includes: determining a target parking space and an obstacle line segment in front of the target parking space; establishing a region of interest around the obstacle line segment; finding an obstacle line segment closest to the ultrasonic detection device from the region of interest as a reference line; calculating an included angle between a first connecting line between the ultrasonic detection device and the obstacle point and a second connecting line between the ultrasonic detection device and a foot point on the reference line; when the included angle is greater than or equal to a maximum beam angle, determining the maximum beam angle as a rotation angle; otherwise, determining the included angle as the rotation angle; determining a rotation point by rotating the obstacle point by the rotation angle; and determining whether a connecting line between the obstacle point and the rotation point has an intersection point with the reference line to determine a final position point of the obstacle. According to the present disclosure, by correcting the detected position point of the obstacle, an accuracy error of the line segment of the obstacle can be reduced, and a parking success rate and a parking efficiency are enhanced.

## Description

### FIELD

The present disclosure relates to the field of automobile safety technologies, and particularly, to an obstacle position correction method and system, a computer device, and a storage medium.

### BACKGROUND

With the development of social economy and industrial technology, people' life quality has been greatly improved, their demands on substances are increasing, and their requirements are increasingly higher and higher. Automobiles, as modern products for promoting the forward leap of human civilization, have gradually owned by every family, and have become one of the most common means of transportation nowadays, such that not only people's lifestyles have been changed and people are provided with more convenience in travelling and reaching farther place.

At present, the rapid quantity increase of reserved vehicles leads to the problem of lack of parking spaces and smaller parking spaces. Thus, it becomes a troublesome matter for drivers to smoothly park the vehicles in the parking spaces. Under such a circumstance, vehicles are now provided with a parking assist function to assist the driver to park. However, the existing parking assist function has problems in actual application. For example, during a parking process, an obstacle point in front of the vehicle detected by an ultrasonic detection device deviates from an actual position of the obstacle, which results in a relatively great accuracy error of the formed obstacle line segment. Accordingly, a space in which the vehicle can move is reduced, thereby reducing a success rate of parking the vehicle in the parking space.

Therefore, it is urgent to provide a technique for accurately determining a position of an obstacle, so as to modify the accuracy of an obstacle line segment and further overcome the above-mentioned defects.

The above background information is provided only to assist the understanding of the present disclosure, and does not establish or acknowledge whether any of the above is available as related art to the present disclosure.

### SUMMARY

Embodiments of the present disclosure provide an obstacle position correction method and system, a computer device, and a storage medium, which can accurately determine a position point of an obstacle in front of a vehicle in a parking process, correct an accuracy of an obstacle line segment, and improve a success rate and an efficiency of parking the vehicle into a parking space.

A first aspect of the embodiments of the present disclosure provides an obstacle position correction method.

As an optional implementation, in the first aspect of the embodiments of the present disclosure, the method includes: determining, in a process of searching for a parking space, a target parking space into which a vehicle is to be parked and an obstacle line segment in front of the target parking space; establishing a region of interest around the obstacle line segment; constantly detecting, by an ultrasonic detection device, whether an obstacle exists in a front lateral side of the vehicle in a parking process; generating, when the obstacle exists in the front lateral side of the vehicle, an obstacle point and traversing the region of interest to find an obstacle line segment closest to the ultrasonic detection device as a reference line of the obstacle point; calculating an included angle between a first connecting line and a second connecting line, where the first connecting line is a connecting line between the ultrasonic detection device and the obstacle point, and the second connecting line is a connecting line between the ultrasonic detection device and a foot point of the ultrasonic detection device on the reference line; determining whether the included angle is greater than or equal to a maximum beam angle of the ultrasonic detection device; determining the maximum beam angle as a rotation angle when the included angle is greater than or equal to the maximum beam angle of the ultrasonic detection device, or otherwise determining the included angle as the rotation angle; determining a rotation point by rotating the obstacle point by the rotation angle with a position of the ultrasonic detection device being a center of a circle and a length of the first connecting line being a radius; determining whether a connecting line between the obstacle point and the rotation point has an intersection point with the reference line; and replacing the obstacle point with the intersection point as a position point of the obstacle when the connecting line between the obstacle point and the rotation point has the intersection point with the reference line; or otherwise, replacing the obstacle point with the rotation point as the position point of the obstacle.

As an optional implementation, in the obstacle position correction method, said determining, in the process of searching for the parking space, the target parking space into which the vehicle is to be parked and the obstacle line segment in front of the target parking space includes: detecting whether an unoccupied parking space is available in the process of searching for the parking space; determining, when the unoccupied parking space is available, the unoccupied parking space as the target parking space into which the vehicle is to be parked, and detecting whether an obstacle exists in front of the target parking space; and when the obstacle exists in front of the target parking space; and abstracting an outline of the detected obstacle into the obstacle line segment.

As an optional implementation, in the obstacle position correction method, said generating the obstacle point and traversing the region of interest to find the obstacle line segment closest to the ultrasonic detection device as the reference line of the obstacle point includes: generating the obstacle point and determining whether the obstacle point meets a correction condition; and traversing, when the obstacle point meets the correction condition, the region of interest to find the obstacle line segment closest to the ultrasonic detection device as the reference line of the obstacle point.

As an optional implementation, in the obstacle position correction method, said generating the obstacle point and determining whether the obstacle point meets the correction condition includes: generating the obstacle point, and determining a horizontal line on which an obstacle line segment closest to the target parking space in the region of interest is located as a guiding line; determining whether a distance between the obstacle point and the guiding line is smaller than a first distance threshold; and determining that the obstacle point meets the correction condition when the distance between the obstacle point and the guiding line is smaller than the first distance threshold, or otherwise, determining that the obstacle point does not meet the correction condition.

As an optional implementation, in the obstacle position correction method, said generating the obstacle point and determining whether the obstacle point meets the correction condition includes: generating the obstacle point, and detecting whether a distance between the obstacle point and the target parking space is greater than a second distance threshold; and determining that the obstacle point meets the correction condition when the distance between the obstacle point and the target parking space is greater than the second distance threshold, or otherwise, determining that the obstacle point does not meet the correction condition.

In a second aspect, the embodiments of the present disclosure provide an obstacle position correction system.

As an optional implementation, the system includes: a parking space determining module configured to determine, in a process of searching for a parking space, a target parking space into which a vehicle is to be parked and an obstacle line segment in front of the target parking space; a region establishing module configured to establish a region of interest around the obstacle line segment; an obstacle detection module configured to constantly detect, by using an ultrasonic detection device, whether an obstacle exists in a front lateral side of the vehicle in a parking process; a reference line determining module configured to generate, when the obstacle exists in the front lateral side of the vehicle, an obstacle point and traverse the region of interest to find an obstacle line segment closest to the ultrasonic detection device as a reference line of the obstacle point; and an included angle calculation module configured to calculate an included angle between a first connecting line and a second connecting line, where the first connecting line is a connecting line between the ultrasonic detection device and the obstacle point, and the second connecting line is a connecting line between the ultrasonic detection device and a foot point of the ultrasonic detection device on the reference line; an included angle determining module configured to determine whether the included angle is greater than or equal to a maximum beam angle of the ultrasonic detection device; an angle determining module configured to determine the maximum beam angle as a rotation angle when the included angle is greater than or equal to the maximum beam angle of the ultrasonic detection device, or otherwise, determine the included angle as the rotation angle; a rotation point determining module configured to determine a rotation point by rotating the obstacle point by the rotation angle with a position of the ultrasonic detection device being a center of a circle and a length of the first connecting line being a radius; an intersection point determining module configured to determine whether a connecting line between the obstacle point and the rotation point has an intersection point with the reference line; and a position point determining module configured to replace the obstacle point with the intersection point as a position point of the obstacle when the connecting line between the obstacle point and the rotation point has an intersection point with the reference line, or otherwise, replace the obstacle point with the rotation point as the position point of the obstacle.

As an optional implementation, in the obstacle position correction system, the parking space determining module is configured to: detect whether an unoccupied parking space is available in the process of searching for the parking space; determine, when the unoccupied parking space is available, the unoccupied parking space as the target parking space into which the vehicle is to be parked, and detect whether an obstacle exists in front of the target parking space; and abstract an outline of the detected obstacle into the obstacle line segment when the obstacle exists in front of the target parking space.

As an optional implementation, in the obstacle position correction system, the reference line determining module includes: a condition determining unit configured to generate the obstacle point and determine whether the obstacle point meets a correction condition; and a reference line determining unit configured to traverse the region of interest to find the obstacle line segment closest to the ultrasonic detection device as the reference line of the obstacle point when the obstacle point meets the correction condition.

As an optional implementation, in the obstacle position correction system, the condition determining unit is configured to: generate the obstacle point, and determine a horizontal line on which an obstacle line segment closest to the target parking space in the region of interest is located as a guiding line; determine whether a distance between the obstacle point and the guiding line is smaller than a first distance threshold; and determine that the obstacle point meets the correction condition when the distance between the obstacle point and the guiding line is smaller than the first distance threshold, or otherwise, determine that the obstacle point does not meet the correction condition.

As an optional implementation, in the obstacle position correction system, the condition determining unit is configured to: generate the obstacle point, and detect whether a distance between the obstacle point and the target parking space is greater than a second distance threshold; and determine that the obstacle point meets the correction condition when the distance between the obstacle point and the target parking space is greater than the second distance threshold, or otherwise determine that the obstacle point does not meet the correction condition.

In a third aspect of the embodiments of the present disclosure, as an optional implementation, the computer device includes a processor, and a memory having a computer program stored thereon. The computer program, when executed by the processor, implements the obstacle position correction method according to any one of the above implementations.

In a fourth aspect, the embodiments of the present disclosure provide a storage medium including computer executable instructions.

In the fourth aspect of the embodiments of the present disclosure, as an optional implementation, the computer executable instructions, when executed by the processor, implement the obstacle position correction method according to any one of the above implementations.

Compared with the related art, the embodiments of the present disclosure have the following beneficial effects.

By correcting the position point of the obstacle in front of the vehicle, which the obstacle is detected by the ultrasonic detection device in the parking process, an accuracy error of the obstacle line segment can be reduced, a parking success rate and a parking efficiency can be enhanced, and user experience of the vehicle can also be improved.

### BRIEF DESCRIPTION OF DRAWINGS

In order to clearly explain technical solutions of the present disclosure, drawings used in the description are briefly described below. Obviously, the drawings described below are merely some embodiments of the present disclosure. Based on these drawings, other drawings can be obtained by those skilled in the art without paying creative effort.
FIG. 1 is a schematic diagram of an embodiment of the present disclosure for analyzing an ultrasonic dotting error in the related art;
FIG. 2 is a flowchart of an obstacle position correction method according to an embodiment of the present disclosure;
FIG. 3 is a schematic diagram of a target parking space and an obstacle line segment in front of the target parking space according to an embodiment of the present disclosure;
FIG. 4 is a schematic diagram of establishing a region of interest according to an embodiment of the present disclosure;
FIG. 5 is a schematic diagram of an obstacle point and a reference line according to an embodiment of the present disclosure;
FIG. 6 is a schematic diagram of an included angle between a first connecting line and a second connecting line according to an embodiment of the present disclosure;
FIG. 7 is a schematic diagram illustrating a situation that an obstacle point has an intersection point with a reference line after being rotated according to an embodiment of the present disclosure;
FIG. 8 is a schematic diagram illustrating a situation that an obstacle point has no intersection point with a reference line after being rotated according to an embodiment of the present disclosure;
FIG. 9 is a flowchart of an obstacle position correction method according to another embodiment of the present disclosure;
FIG. 10 is a flowchart of an obstacle position correction method according to another embodiment of the present disclosure;
FIG. 11 is a flowchart of an obstacle position correction method according to another embodiment of the present disclosure;
FIG. 12 is a schematic diagram of a guiding line according to an embodiment of the present disclosure;
FIG. 13 is a flowchart of an obstacle position correction method according to another embodiment of the present disclosure;
FIG. 14 is a schematic diagram of functional blocks of an obstacle position correction system according to another embodiment of the present disclosure; and
FIG. 15 is a schematic structural diagram of a computer device according to another embodiment of the present disclosure.

### DESCRIPTION OF EMBODIMENTS

Embodiments of the present disclosure are clearly and thoroughly described below in conjunction with the accompanying drawings and specific embodiments. Obviously, the embodiments described herein are only part of embodiments of the present disclosure, but are not all embodiments of the present disclosure. Based on the embodiments of the present disclosure, other embodiments obtained by those skilled in the art without paying creative efforts shall fall within scope of the present disclosure.

It should be noted that the terms "first" and "second" and the like in the specification and claims of the present disclosure are intended to distinguish different objects, rather than describing a specific order. In the embodiments of the present disclosure, the terms such as "include", "comprise," "have", and any variations thereof are non-exclusive inclusions. For example, a process, method, system, article, or apparatus that comprises/includes a series of steps or elements may include other steps or elements that are not expressly listed or inherent to such a process, method, article, or device, rather than being limited to those steps or elements explicitly listed.

The embodiments of the present disclosure provide an obstacle position correction method, an obstacle position correction system, a computer device, and a storage medium. They can effectively correct a position point of an obstacle in front of a vehicle, which is detected by an ultrasonic detection device in a parking process, reduce an occurrence probability of an accident such as scraping or colliding of the vehicle, thereby ensuring a driving safety and improve the user experience of the vehicle.

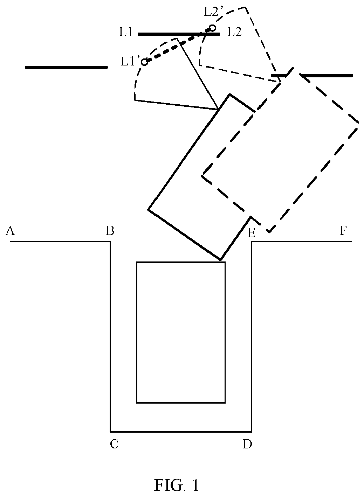

Before analyzing drawbacks of the related art, it is necessary to know that a parking assistance function is implemented by means of a parking system. The parking system includes a series of sensors, such as ultrasonic radars that are disposed in front of a head of the vehicle, behind a tail of the vehicle, and on lateral sides of a body of the vehicle. It is known to drivers that a vehicle is not always moving perpendicularly to a parking space during parking in a vertical or diagonal parking space. Instead of that, the vehicle is usually moving obliquely to the parking space when the vehicle does not enter or just enter the parking space. While the vehicle is moving obliquely to the parking space, the driver shall pay attention to avoid front lateral sides of the vehicle colliding with an obstacle in front of the parking space. Therefore, it is necessary to utilize the ultrasonic radar disposed at the lateral side of the vehicle body close to the head of the vehicle. However, when the obstacle is detected by the ultrasonic radar, a setting mechanism of the ultrasonic sensor may take a direction of a central axis as a direction of the obstacle. In this way, a deviation between a detected position of the obstacle and an actual position of the obstacle is formed, where the detected position of the obstacle is determined based on the direction and a distance of the obstacle, and thus a determined obstacle line segment may deviate from an actual obstacle line segment, referring to the example illustrated in FIG. 1. In FIG. 1, a line segment **L1L2** represents an actual obstacle line segment, a line segment **L1'L2'** represents a determined obstacle line segment, and it can be seen that an angle is included between the line segment **L1'L2'** and the line segment **L1L2.** If the line segment **L1'L2'** is used to represents the line segment **L1L2,** the obstacle line segment will exist on a parking path, which obviously is adverse for the parking of the vehicle in the parking space. In view of the defects of the related art, based on abundant practical experience and professional knowledge in the automobile industry, the inventor develops a feasible and more practical obstacle position correction technique having through research and innovation in combination with scientific principle. After continuous research, design and repeated trial and improvement, the present disclosure with practical value is finally created.

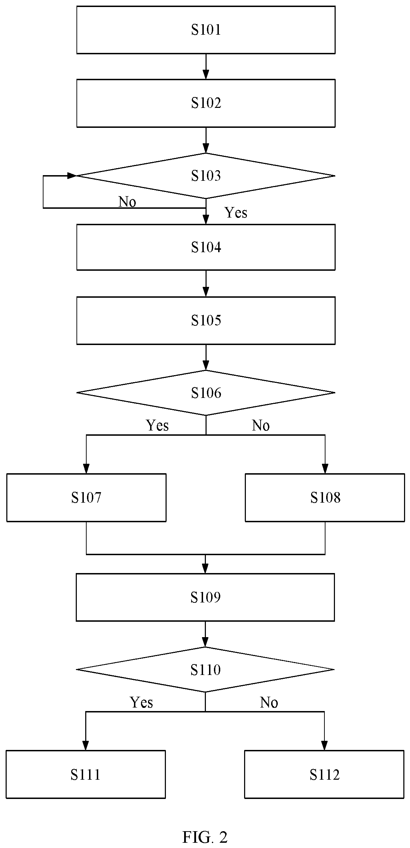

FIG. 2 is a flowchart of an obstacle position correction method according to the present embodiment of the present disclosure. Referring to FIG. 2, the method is applicable to a situation that a driver parks a vehicle in a parking space in a parking lot, and the method is executed by an obstacle position correction system. The obstacle position correction system may be implemented by software and/or hardware and integrated inside a vehicle. As illustrated in FIG. 2, the obstacle position correction method may include following steps.

At block S 101, in a process of searching for a parking space, a target parking space into which a vehicle is to be parked and an obstacle line segment in front of the target parking space are determined.

The obstacle line segment refers to a line segment for representing the obstacle. In the embodiment, any obstacle in front of the target parking space is represented by a line segment, the line segment is defined by two end points, and a length of the line segment is a width of the obstacle. If the obstacle is a non-planar object, the determined position of the line segment is determined by a part of the obstacle closest to the target parking space.

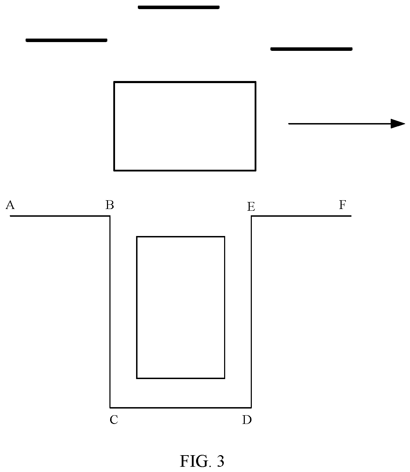

It should be noted that, in the present embodiment, an ultrasonic detection device is used to find a parking space where the vehicle can park, once the parking space is found, the parking space is confirmed as the target parking space. In other words, the target parking space must be an unoccupied parking space. Referring to FIG. 3, a spatial area enclosed by B, C, D, and E represents the target parking space to be searched for. Although the example of the parking space illustrated in FIG. 3 is a vertical parking space, the same is also applicable to a diagonal parking space. In addition, the arrow in FIG. 3 indicates a driving direction of the vehicle In the process of searching for the parking space, a bold line square indicates the vehicle, a thin line square in the target parking space represents a target parking position, i.e., a position where the vehicle is finally parked. The target parking position is generally set to be a center of the parking space, in order to maintain the maximal distance from other objects around the parking space.

In the present embodiment, the ultrasonic detection device may be an ultrasonic sensor, an ultrasonic distance meter, or other instruments configured to detect and measure a distance by using an ultrasonic principle. The embodiments of the present disclosure take the ultrasonic sensor as an example.

In the process of searching for the parking space, the ultrasonic sensor transmits ultrasonic waves in a designated frequency. If the ultrasonic waves encounter an obstacle, the ultrasonic waves can turn back in an echo form. When the ultrasonic sensor receives the echo, it indicates that the obstacle exists, and the ultrasonic detection device calculates a distance between the vehicle and the obstacle based on a propagation speed of the ultrasonic waves and the time period from transmitting the ultrasonic waves to receiving the echo. Generally, when the distance between the vehicle and the obstacle is detected to have a relatively great jumping change, it can be determined that the current parking space is an unoccupied parking space. Of course, many ways are available to search for a parking space through ultrasonic technology, and they have all been implemented in the related art. Since it is not the focus of the design of the present disclosure, it will not be described in detail herein.

It should be understood that the above-mentioned obstacle may be a parked vehicle, or a construction such as a pillar or a wall, which is not specifically limited in the embodiments of the present disclosure.

At block S102, a region of interest around the obstacle line segment is established.

It should be noted that, in the field of image processing, a Region of Interest (ROI) is an image region to be processed, which is selected and outlined in a box, a circle, an ellipse, an irregular polygon, etc., in an image to be processed. Such a region is the focus of image analysis, and is defined for further processing. A target to be processed is defined by establishing the ROI, thereby saving the processing time and increasing the accuracy.

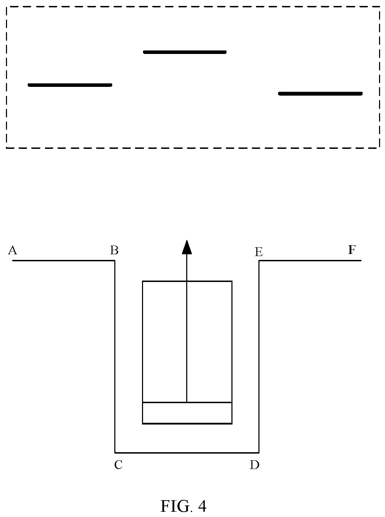

Referring to FIG. 4, after the target parking space is determined, the ROI including all detected obstacle line segments may be established by taking the target parking space as a center.

At block S103, whether an obstacle exists in a front lateral side of the vehicle in a parking process is constantly detected by an ultrasonic detection device. When the obstacle exists in the front lateral side of the vehicle, block S104 is executed, or otherwise, block S103 is executed again.

At block S104, an obstacle point is generated and the region of interest is traversed to find an obstacle line segment closest to the ultrasonic detection device as a reference line of the obstacle point.

It should be noted that, as described above, when the ultrasonic detection device detects that the obstacle exists in the front lateral side of the vehicle, the setting mechanism of the ultrasonic detection device determines the direction of the center axis as the direction in which the obstacle is present, and the determined position is deviated from the actual position direction of the obstacle, and thus it is necessary to correct the obstacle point generated for each detection to be as close as possible to the actual position direction.

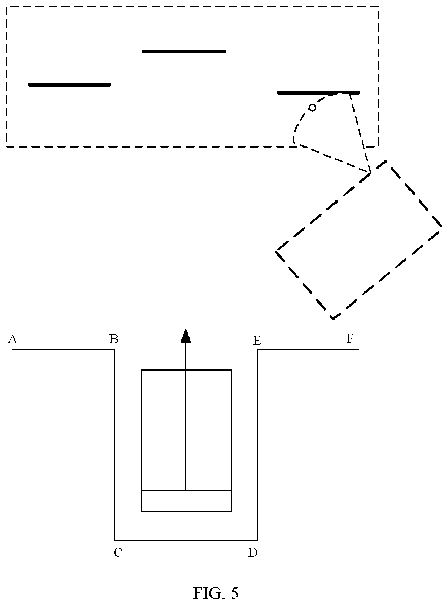

Referring to FIG. 5, a dotted square represents a moving vehicle, and a hollow dot is the obstacle point, which is located in the front lateral side of the vehicle and detected by the ultrasonic detection device. Specifically, the obstacle line segment to which the obstacle point belongs is required to be found first. Generally, the obstacle line segment closest to the ultrasonic detection device is considered to be the obstacle line segment to which the obstacle point belongs, and it is thus used as the reference line of the obstacle point.

At block S105, an included angle between a first connecting line and a second connecting line is calculated, where the first connecting line is a connecting line between the ultrasonic detection device and the obstacle point, and the second connecting line is a connecting line between the ultrasonic detection device and a foot point of the ultrasonic detection device on the reference line.

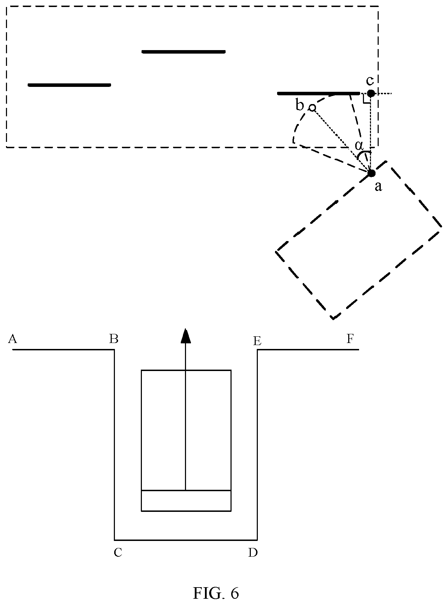

Referring to FIG. 6, prior to calculating the included angle between the first connecting line and the second connecting line, the first connecting line and the second connecting line need to be determined. As illustrated in FIG. 6, the first connecting line is a connecting line between a mounting position (point **a**) of the ultrasonic detection device and the obstacle point (point b), and the second connecting line is a connecting line between the mounting position (point **a**) of the ultrasonic detection device and the foot point (point c) of the ultrasonic detection device on the reference line. Thus, the included angle between the first connecting line and the second connecting line is an angle **α**, as illustrated in FIG. 6.

At block S106, it is determined whether the included angle is greater than or equal to a maximum beam angle of the ultrasonic detection device; if the included angle is greater than or equal to the maximum beam angle of the ultrasonic detection device, block S107 is executed, or otherwise, block S108 is executed.

At block S107, the maximum beam angle is determined as a rotation angle.

At block S108, the included angle is determined as a rotation angle.

It should be noted that the beam angle is a concept involving the ultrasonic sensor transmits ultrasonic waves. When the ultrasonic sensor emits ultrasonic waves, the ultrasonic beam energy is the greatest in a direction of an extension (perpendicular to the sensor surface) of the central axis of the ultrasonic sensor, while the energy of sound waves gradually decreases in other directions. A direction corresponding to the maximum beam angle refers to an outermost direction in which the obstacle may be located. That is, it is impossible that the obstacle is located in a direction outside the maximum beam angle. When the included angle **α** between the first connecting line and the second connecting line is greater than or equal to the maximum beam angle of the ultrasonic detection device, the maximum beam angle shall be a direction in which the obstacle is located, and thus the maximum beam angle is determined as the rotation angle (angle **β**). When the included angle **α** between the first connecting line and the second connecting line is smaller than the maximum beam angle of the ultrasonic detection device, the included angle **α** shall be the direction in which the obstacle is located, and thus the included angle is determined as a rotation angle (angle **β**).

At block S109, a rotation point is determined by rotating the obstacle point by the rotation angle with a position of the ultrasonic detection device being a center of a circle and a length of the first connecting line being a radius.

It should be noted that, after the rotation angle is determined, a rotation correction can be performed on the detected obstacle point. Specifically, during the rotation correction, the obstacle position (point **b**) is rotated by the rotation angle (angle **β**) in a direction approaching the reference line (i.e., in a direction away from the target parking space) in such a manner that the mounting position of the ultrasonic detection device is taken as the center of the circle and the length of the first connecting line is taken as the radius, so as to obtain the rotation point (point **b'**).

At block S110, it is determined whether a connecting line between the obstacle point and the rotation point has an intersection point with the reference line; if the connecting line between the obstacle point and the rotation point has the intersection point with the reference line, block S111 is executed, or otherwise, block S112 is executed.

At block Sill, the obstacle point is replaced with the intersection point as a position point of the obstacle.

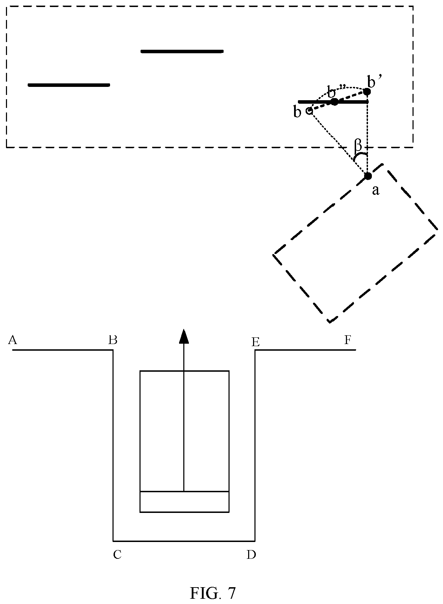

FIG. 7 illustrates a case when the intersection exists. Referring to FIG. 7, after the obstacle point (point **b**) is rotated by the rotation angle (angle **β**) in the direction approaching to the reference line (i.e., in the direction far away from the target parking space), the connecting line between the obstacle point (point **b**) and the rotation point (point **b'**) intersects with the reference line. In this case, the intersection point (point **b"**) replaces the obstacle point as the position point of the obstacle.

At block S112, the obstacle point is replaced with the rotation point as the position point of the obstacle.

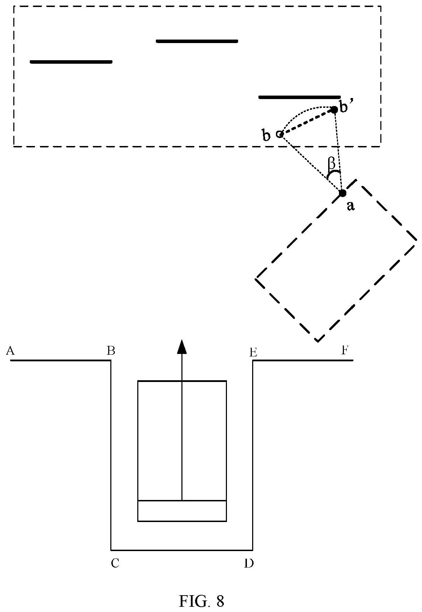

FIG. 8 illustrates a case when no intersection exists. Referring to FIG. 8, after the obstacle point (point **b**) is rotated by the rotation angle (angle **β**) in the direction approaching to the reference line (i.e., in the direction away from the target parking space), the connecting line between the obstacle point (point **b**) and the rotation point (point **b'**) does not intersects the reference line. In this case, the rotation point (point **b'**) replaces the obstacle point to serve as the position point of the obstacle.

In the present embodiment of the present disclosure, the obstacle position correction method can reduce the accuracy error of the obstacle line segment by correcting the position point of the obstacle in the front lateral side of the vehicle, which is detected by the ultrasonic detection device in the parking process. In this way, the parking success rate and the parking efficiency are both enhanced, and the user experience of the vehicle is improved.

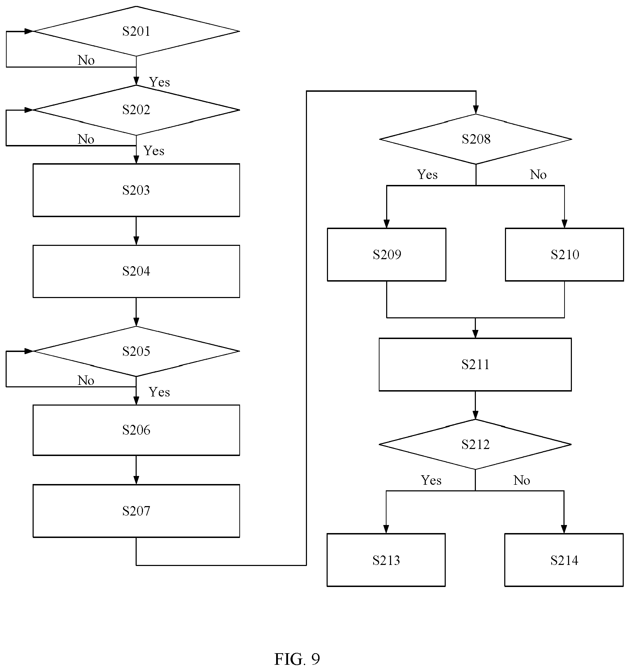

FIG. 9 is a flowchart of an obstacle position correction method according to another embodiment of the present disclosure. Referring to FIG. 9, based on the technical solution provided by the above embodiment, block S101 of determining, in the process of searching for the parking space, the target parking space into which the vehicle is to be parked and the obstacle line segment in front of the target parking space is further optimized. Explanations of the same or corresponding terms as those in the above embodiment are omitted. Preferably, block S101 further includes following steps: detecting whether an unoccupied parking space is available in the process of searching for the parking space; when the unoccupied parking space is available, determining the unoccupied parking space as the target parking space into which the vehicle is to be parked, and detecting whether an obstacle exists in front of the target parking space; and when the obstacle exists in front of the target parking space, abstracting an outline of the detected obstacle into the obstacle line segment.

Based on the above optimizations, as illustrated in FIG. 9, the obstacle position correction method provided in the present embodiment may specifically include the following block actions.

At block S201, in the process of searching for the parking space, it is detected whether the unoccupied parking space is available. If the unoccupied parking space is available, block S202 is executed, or otherwise, block S201 is executed again.

It should be noted that, the process of searching for the parking space is required to be triggered, generally triggered by the driver, for example, through pressing a certain function key, a voice input or controlling by an application (APP), thereby notifying the vehicle to activate the ultrasonic detection device to detect whether an unoccupied parking space is available.

At block S202, the unoccupied parking space is determined as the target parking space into which the vehicle is to be parked, and it is detected whether an obstacle exists in front of the target parking space; if the obstacle exists in front of the target parking space, block S203 is executed, or otherwise, block S202 is executed again.

At block S203, an outline of the detected obstacle is abstracted into the obstacle line segment.

It should be noted that the outline of the obstacle may be acquired by the ultrasonic detection device. Specifically, the ultrasonic detection device constantly acquire ultrasonic data points of the obstacle to form a set of data points, and these data points are connected to form a rough outline of the obstacle, and then a position that is most protruding on the outline, i.e., closest to the target parking space, is positioned as a starting position of the line segment, from which the line segment extends to both ends to cover the outline of the obstacle, i.e., reaching the width of the obstacle, so as to obtain the obstacle line segment.

At block S204, a region of interest is established around the obstacle line segment.

At block S205, in a parking process, whether an obstacle exists in a front lateral side of the vehicle is constantly detected by an ultrasonic detection device; if the obstacle exists in the front lateral side of the vehicle, block S206 is executed, or otherwise, block S205 is executed again.

At block S206, an obstacle point is generated and the region of interest is traversed to find an obstacle line segment closest to the ultrasonic detection device as a reference line of the obstacle point.

At block S207, an included angle between a first connecting line and a second connecting line is calculated, where the first connecting line is a connecting line between the ultrasonic detection device and the obstacle point, and the second connecting line is a connecting line between the ultrasonic detection device and a foot point of the ultrasonic detection device on the reference line.

At block S208, it is determined whether the included angle is greater than or equal to a maximum beam angle of the ultrasonic detection device; if the included angle is greater than or equal to the maximum beam angle of the ultrasonic detection device, block S209 is executed, or otherwise, block S210 is executed.

At block S209, the maximum beam angle is determined as a rotation angle.

At block S210, the included angle is determined as the rotation angle.

At block S211, a rotation point is determined by rotating the obstacle point by the rotation angle with a position of the ultrasonic detection device being a center of a circle and a length of the first connecting line being a radius.

At block S212, it is determined whether a connecting line between the obstacle point and the rotation point has an intersection point with the reference line; if the connecting line between the obstacle point and the rotation point has the intersection point with the reference line, block S213 is executed, or otherwise, block S214 is executed.

At block S213, the obstacle point is replaced with the intersection point as a position point of the obstacle.

At block S214, the obstacle point is replaced with the rotation point as the position point of the obstacle.

In addition to the beneficial effects of the previous embodiment, the present embodiment of the present disclosure allows the vehicle to be accurately informed with the time of executing a certain step by setting a determination of the obstacle line segment, thereby improving and perfecting the whole automatic parking process, and allowing the vehicle to be more intelligent.

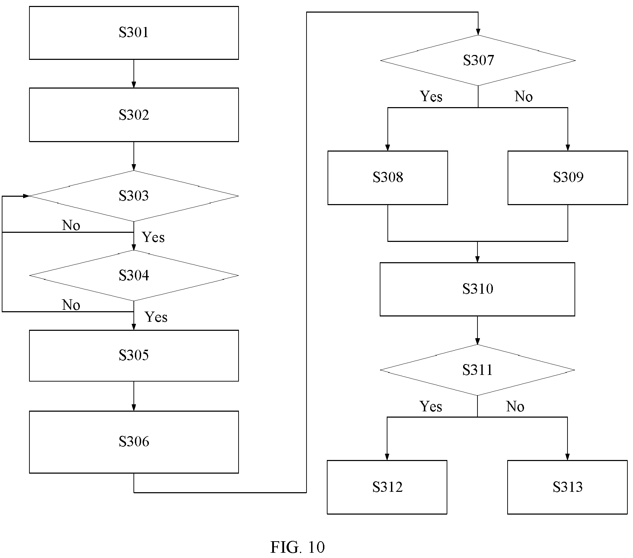

FIG. 10 is a flowchart of an obstacle position correction method according to another embodiment of the present disclosure. Referring to FIG. 10, based on the technical solution provided by the above embodiment, block S104 of generating the obstacle point and traversing the region of interest to find the obstacle line segment closest to the ultrasonic detection device as the reference line of the obstacle point is further optimized. Explanations of the same or corresponding terms as those in the above embodiments are omitted. Preferably, block S104 further includes following steps: generating the obstacle point, and determining whether the obstacle point meets a correction condition; when the obstacle point meets the correction condition, traversing the region of interest to find the obstacle line segment closest to the ultrasonic detection device as the reference line of the obstacle point.

Based on the above optimizations, as illustrated in FIG. 10, the obstacle position correction method provided by the present embodiment may specifically include the following block actions.

At block S301, in a process of searching for a parking space, determined are a target parking space into which a vehicle is to be parked and an obstacle line segment in front of the target parking space.

At block S302, a region of interest is established around the obstacle line segment.

At block S303, in a parking process, it is constantly detected by an ultrasonic detection device whether an obstacle exists in a front lateral side of the vehicle; if the obstacle exists in the front lateral side of the vehicle, block S304 is executed, or otherwise, block S303 is executed.

At block S304, the obstacle point is generated, and it is determined whether the obstacle point meets a correction condition; if the obstacle point meets the correction condition, block S305 is executed, or otherwise, block S303 is executed again.

It should be noted that the correction condition is set by the skilled person based on his or her experience obtained from the specific experimental results. The purpose of setting the correction condition is to allow the vehicle to be informed with when the detected obstacle point needs to be corrected and when the detected obstacle point is not required to be corrected. In this way, the vehicle is more intelligent, and waste of resources is avoided.

At block S305, the region of interest is traversed to find the obstacle line segment closest to the ultrasonic detection device as a reference line of the obstacle point.

At block S306, an included angle between a first connecting line and a second connecting line is calculated, where the first connecting line is a connecting line between the ultrasonic detection device and the obstacle point, and the second connecting line is a connecting line between the ultrasonic detection device and a foot point of the ultrasonic detection device on the reference line.

At block S307, it is determined whether the included angle is greater than or equal to a maximum beam angle of the ultrasonic detection device; if the included angle is greater than or equal to the maximum beam angle of the ultrasonic detection device, block S308 is executed, or otherwise, block S309 is executed.

At block S308, the maximum beam angle is determined as a rotation angle.

At block S309, the included angle is determined as the rotation angle.

At block S310, a rotation point is determined by rotating the obstacle point by the rotation angle with a position of the ultrasonic detection device being a center of a circle and a length of the first connecting line being a radius.

At block S311, it is determined whether a connecting line between the obstacle point and the rotation point has an intersection point with the reference line; if the connecting line between the obstacle point and the rotation point has the intersection point with the reference line, block S312 is executed, or otherwise, block S313 is executed.

At block S312, the obstacle point is replaced with the intersection point as a position point of the obstacle.

At block S313, the obstacle point is replaced with the rotation point as the position point of the obstacle.

In addition to the beneficial effects of the previous embodiments, by setting the correction condition, the present embodiment of the present disclosure allow the vehicle to be informed with when the detected obstacle point needs to be corrected and when the detected obstacle point does not need to be corrected. In this way, the vehicle is more intelligent and humanized, the data amount of processing is reduced as much as possible, thereby enhancing the execution efficiency.

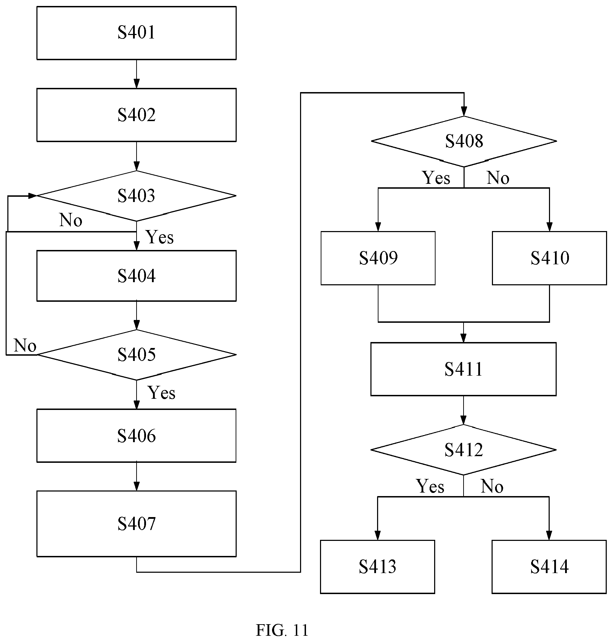

FIG. 11 is a flowchart of an obstacle position correction method according to another embodiment of the present disclosure. Referring to FIG. 11, based on the technical solution provided in the previous embodiment, block S304 of generating the obstacle point and determining whether the obstacle point meets the correction condition is further optimized. Explanations of the same or corresponding terms as those in the above embodiments are omitted. Preferably, block S304 further includes following steps: generating the obstacle point, and determining a horizontal line on which an obstacle line segment closest to the target parking space in the region of interest is located as a guiding line; determining whether a distance between the obstacle point and the guiding line is smaller than a first distance threshold; and determining that the obstacle point meets the correction condition when the distance between the obstacle point and the guiding line is smaller than the first distance threshold; or otherwise, determining that the obstacle point does not meet the correction condition.

Based on the above optimizations, as illustrated in FIG. 11, the obstacle position correction method provided in the embodiment may specifically include the following block actions.

At block S401, in a process of searching for a parking space, determined are a target parking space into which a vehicle is to be parked and an obstacle line segment in front of the target parking space.

At block S402, a region of interest is established around the obstacle line segment.

At block S403, in a parking process, it is constantly detected by an ultrasonic detection device whether an obstacle exists in a front lateral side of the vehicle; if the obstacle exists in the front lateral side of the vehicle, block S404 is executed, or otherwise, block S403 is executed again.

At block S404, the obstacle point is generated, and a horizontal line on which an obstacle line segment closest to the target parking space in the region of interest is located is determined as a guiding line.

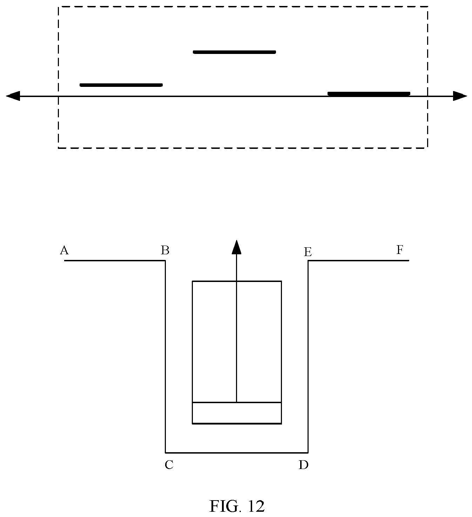

The line with double arrows in FIG. 12 is the guiding line. Referring to FIG. 12, it can be seen that the rightmost line segment among the three obstacle line segments in the region of interest is the line segment closest to the target parking space, and thus the horizontal line on which the line segment is located serves as the guiding line.

At block S405, it is determined whether a distance between the obstacle point and the guiding line is smaller than a first distance threshold; if the distance between the obstacle point and the guiding line is smaller than the first distance threshold, it is determined that the obstacle point meets the correction condition, and block S406 is executed; otherwise, it is determined that the obstacle point does not meet the correction condition, and block S403 is executed again.

It should be noted that the first distance threshold is set by a technician based on his or her experience obtained from specific experimental results, and the first distance threshold may be any value.

When the distance between the determined guiding line closest to the target parking space and the detected obstacle point is smaller than the first distance threshold, it is still considered that the vehicle may collide with the obstacle at the moment, and in this case, the vehicle still does not enter the target parking space or shallowly enters the target parking space. Similarly, when the distance between the determined guiding line closest to the target parking space and the detected obstacle point is greater than the first distance threshold, it is considered that the vehicle is impossible to collide with the obstacle. In this case, the vehicle has already entered the target parking space deeply, and the obstacle point, even being detected, is no longer the obstacle in front of the target parking space, without requiring correction.

At block S406, the region of interest is traversed to find an obstacle line segment closest to the ultrasonic detection device as a reference line of the obstacle point.

And S407, an included angle between a first connecting line and a second connecting line is calculated, where the first connecting line is a connecting line between the ultrasonic detection device and the obstacle point, and the second connecting line is a connecting line between the ultrasonic detection device and a foot point of the ultrasonic detection device on the reference line.

At block S408, it is determined whether the included angle is greater than or equal to a maximum beam angle of the ultrasonic detection device; if the included angle is greater than or equal to the maximum beam angle of the ultrasonic detection device, block S409 is executed, or otherwise, block S410 is executed.

At block S409, the maximum beam angle is determined as a rotation angle.

At block S410, the included angle is determined as the rotation angle.

At block S411, a rotation point is determined by rotating the obstacle point by the rotation angle in such a manner a position of the ultrasonic detection device serves as a center of a circle and a length of the first connecting line serves as a radius.

At block S412, it is determined whether a connecting line between the obstacle point and the rotation point has an intersection point with the reference line; if the connecting line between the obstacle point and the rotation point has the intersection point with the reference line, block S413 is executed, or otherwise, block S414 is executed.

At block S413, the obstacle point is replaced with the intersection point as a position point of the obstacle.

At block S414, the obstacle point is replaced with the rotation point as the position point of the obstacle.

In addition to the beneficial effects of the above embodiment, by refining the determining condition, the present embodiment of the present disclosure allows the vehicle to be informed with the time of starting or stopping the correction of the detected obstacle point in front lateral side of the vehicle. In this way, the vehicle is more intelligent and humanized, and has higher values in terms of popularization and applications.

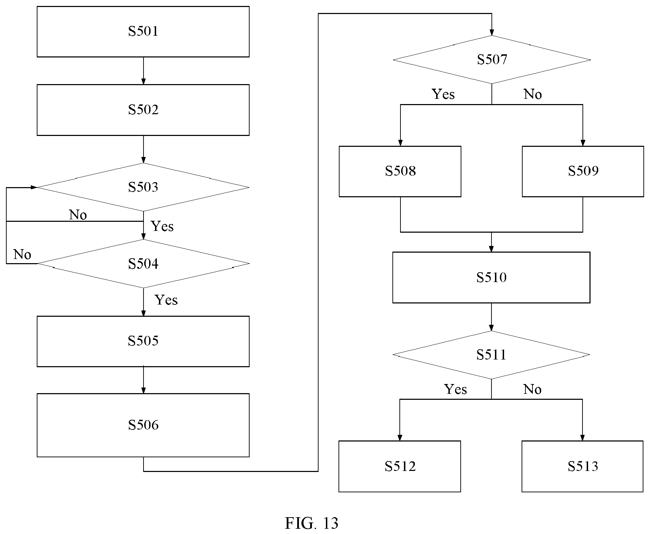

FIG. 13 is a flowchart of an obstacle position correction method according to another embodiment of the present disclosure. Referring to FIG. 13, based on the technical solution provided in the previous embodiment, block S304 of generating the obstacle point and determining whether the obstacle point meets the correction condition is further optimized. Explanations of the same or corresponding terms as those in the above embodiments are omitted. Preferably, block S304 further includes following steps: generating the obstacle point, and determining whether a distance between the obstacle point and the target parking space is greater than a second distance threshold; and determining that the obstacle point meets the correction condition when the distance between the obstacle point and the target parking space is greater than the second distance threshold, or otherwise, determining that the obstacle point does not meet the correction condition.

Based on the above optimizations, as illustrated in FIG. 13, the obstacle position correction method provided by the embodiment may specifically include the following block actions.

At block S501, in a process of searching for a parking space, determined are a target parking space into which a vehicle is to be parked and an obstacle line segment in front of the target parking space.

At block S502, a region of interest is established around the obstacle line segment.

At block S503, in a parking process, it is constantly detected by an ultrasonic detection device whether an obstacle exists in a front lateral side of the vehicle; if the obstacle exists in the front lateral side of the vehicle, block S504 is executed, or otherwise, block S503 is executed again.

At block S504, the obstacle point is generated, and it is detected whether a distance between the obstacle point and the target parking space is greater than a second distance threshold; if the distance between the obstacle point and the target parking space is greater than the second distance threshold, it is determined that the obstacle point meets the correction condition, and block S505 is executed; otherwise, it is determined that the obstacle point does not meet the correction condition, and block S503 is executed again.

It should be noted that the second distance threshold is set by a technician based on his or her experience obtained from specific experimental results, and the second distance threshold may be any value.

When the distance between the target parking space (specifically, the target parking position in the target parking space or any boundary line of the target parking space) and the detected obstacle point is greater than the second distance threshold, i.e., when the obstacle point is still relatively far away from the target parking space, it is considered that the vehicle has not enter the target parking space yet or shallowly enters the target parking space. In this case, it is still considered that the vehicle may collide with the obstacle in front of the parking space. Similarly, when the distance between the target parking space and the detected obstacle point is smaller than or equal to the second distance threshold, i.e., when the obstacle point is relatively closer to the target parking space, it is considered that the vehicle has entered the target parking space deeply, and in this case, the vehicle is impossible to collide with the obstacle. Thus, the obstacle point, even being detected, is no longer the obstacle in front of the target parking space, without requiring correction.

At block S505, the region of interest is traversed to find an obstacle line segment closest to the ultrasonic detection device as a reference line of the obstacle point.

At block S506, an included angle between a first connecting line and a second connecting line is calculated, where the first connecting line is a connecting line between the ultrasonic detection device and the obstacle point, and the second connecting line is a connecting line between the ultrasonic detection device and a foot point of the ultrasonic detection device on the reference line.

At block S507, it is determined whether the included angle is greater than or equal to a maximum beam angle of the ultrasonic detection device; if the included angle is greater than or equal to the maximum beam angle of the ultrasonic detection device, block S508 is executed, or otherwise, block S509 is executed.

At block S508, the maximum beam angle is determined as a rotation angle.

At block S509, the included angle is determined as the rotation angle.

At block S510, a rotation point is determined by rotating the obstacle point by the rotation angle with a position of the ultrasonic detection device being a center of a circle and a length of the first connecting line being a radius.

At block S511, it is determined whether a connecting line between the obstacle point and the rotation point has an intersection point with the reference line; if the connecting line between the obstacle point and the rotation point has the intersection point with the reference lined, block S512 is executed, or otherwise, block S513 is executed.

At block S512, the obstacle point is replaced with the intersection point as a position point of the obstacle.

At block S513, the obstacle point is replaced with the rotation point as the position point of the obstacle.

In addition to the beneficial effects of the above embodiment, by refining the determining condition, the present embodiment of the present disclosure allows the vehicle to be informed with the time of starting or stopping the correction of the detected obstacle point in front of the vehicle side. In this way, the vehicle is more intelligent and humanized, and has higher values in terms of popularization and applications.

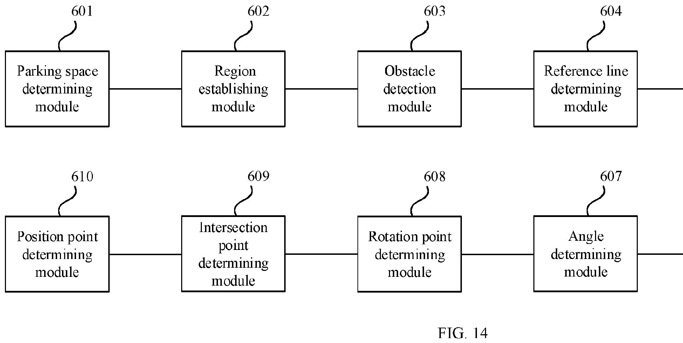

FIG. 14 is a schematic diagram of functional blocks of an obstacle position correction system according to another embodiment of the present disclosure. Referring to FIG. 14, the system is adapted to execute the obstacle position correction method according to embodiments of the present disclosure. The system specifically includes a parking space determining module 601, a region establishing module 602, an obstacle detection module 603, a reference line determining module 604, an included angle calculation module 605, an included angle determining module 606, an angle determining module 607, a rotation point determining module 608, an intersection point determining module 609, and a position point determining module 610.

The parking space determining module 601 is configured to determine, in a process of searching for a parking space, a target parking space into which a vehicle is to be parked and an obstacle line segment in front of the target parking space.

The region establishing module 602 is configured to establish a region of interest around the obstacle line segment.

The obstacle detection module 603 is configured to constantly detect, by using an ultrasonic detection device, whether an obstacle exists in a front lateral side of the vehicle in a parking process.

The reference line determining module 604 is configured to generate an obstacle point and traverse the region of interest to find an obstacle line segment closest to the ultrasonic detection device as a reference line of the obstacle point when the obstacle exists in the front lateral side of the vehicle.

The included angle calculation module 605 is configured to calculate an included angle between a first connecting line and a second connecting line, where the first connecting line is a connecting line between the ultrasonic detection device and the obstacle point, and the second connecting line is a connecting line between the ultrasonic detection device and a foot point of the ultrasonic detection device on the reference line.

The included angle determining module 606 is configured to determine whether the included angle is greater than or equal to a maximum beam angle of the ultrasonic detection device.

The angle determining module 607 is configured to determine the maximum beam angle as a rotation angle when the included angle is greater than or equal to the maximum beam angle of the ultrasonic detection device; or otherwise, determine the included angle as the rotation angle.

The rotation point determining module 608 is configured to determine a rotation point by rotating the obstacle point by the rotation angle with a position of the ultrasonic detection device being a center of a circle and a length of the first connecting line being a radius.

The intersection point determining module 609 is configured to determine whether a connecting line between the obstacle point and the rotation point has an intersection point with the reference line.

The position point determining module 610 is configured to replace the obstacle point with the intersection point as a position point of the obstacle when the connecting line between the obstacle point and the rotation point has the intersection point with the reference line; or otherwise, replace the obstacle point with the rotation point as the position point of the obstacle.

Preferably, the parking space determining module is specifically configured to: detect whether an unoccupied parking space is available in the process of searching for the parking space; determine the unoccupied parking space as the target parking space into which the vehicle is to be parked, and detect whether an obstacle exists in front of the target parking space, when the unoccupied parking space is available; and abstract an outline of the detected obstacle into the obstacle line segment when the obstacle exists in front of the target parking space.

Preferably, the reference line determining module includes a condition determining unit configured to generate the obstacle point and determine whether the obstacle point meets a correction condition, and a reference line determining unit configured to traverse the region of interest to find the obstacle line segment closest to the ultrasonic detection device as the reference line of the obstacle point, when the obstacle point meets the correction condition.

In a first implementation, preferably, the condition determining unit is specifically configured to: generate the obstacle point, and determine a horizontal line on which an obstacle line segment closest to the target parking space in the region of interest is located as a guiding line; determine whether a distance between the obstacle point and the guiding line is smaller than a first distance threshold; and determine that the obstacle point meets the correction condition when the distance between the obstacle point and the guiding line is smaller than the first distance threshold, or otherwise, determine that the obstacle point does not meet the correction condition.

In a second implementation, preferably, the condition determining unit is specifically configured to generate the obstacle point, and detect whether a distance between the obstacle point and the target parking space is greater than a second distance threshold; and determine that the obstacle point meets the correction condition when the distance between the obstacle point and the target parking space is greater than the second distance threshold, or otherwise, determine that the obstacle point does not meet the correction condition.

In the present embodiment of the present disclosure, the obstacle position correction system can reduce the accuracy error of the obstacle line segment by correcting the position point of the obstacle in the front lateral side of the vehicle, which is detected by the ultrasonic detection device in the parking process. In this way, the parking success rate and the parking efficiency are both enhanced, and the user experience of the vehicle is improved.

The above-mentioned system can execute the method provided by any one of the embodiments of the present disclosure, and has the corresponding functional modules and beneficial effects that are brought by implementing the method.

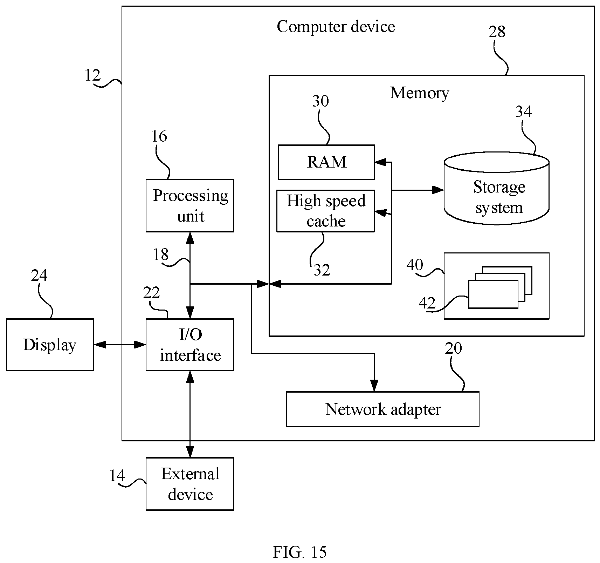

FIG. 15 is a schematic structural diagram of a computer device according to another embodiment of the present disclosure. FIG. 15 illustrates a block diagram of an exemplary computer device 12 suitable for use in implementing the embodiments of the present disclosure. The computer device 12 illustrated in FIG. 15 is only an example and shall not limit the functions and application scope of the embodiments of the present disclosure.

As illustrated in FIG. 15, the computer device 12 is in a form of a general-purpose computing apparatus. The computer device 12 may include, but is not limited to, one or more processors or processing units 16, a system memory 28, and a bus 18 configured to connect different system components (including the system memory 28 and the processing unit 16).

The bus 18 represents one or more of several types of bus architectures, including a memory bus or a memory control bus, a peripheral bus, a graphic acceleration port bus, a processor bus, or a local bus using any bus architecture in a variety of bus architectures. For example, these architectures include, but are not limited to, an industry standard architecture (ISA) bus, a micro-channel architecture (MCA) bus, an enhanced ISA bus, a video electronics standards association (VESA) local bus, and a peripheral component interconnect (PCI) bus.

Typically, the computer device 12 may include multiple kinds of computer-readable media. These media may be any storage media accessible by the computer device 12, including transitory or non-transitory storage medium, and movable or unmovable storage medium.

The system memory 28 may include a computer-readable medium in a form of volatile memory, such as a random access memory (RAM) 30 and/or a high-speed cache memory 32. The computer device 12 may further include other transitory/non-transitory storage media and movable/unmovable storage media. For example, the storage system 34 may be used to read and write non-removable, non-volatile magnetic media (not shown, commonly referred to as "hard disk drives"). Although not illustrated in FIG. 15, a disk driver may be provided to read and write movable non-volatile magnetic disks (e.g., "floppy disks"), as well as an optical driver may be provided to read and write movable non-volatile optical disks (e.g., a Compact Disc Read Only Memory (CD-ROM), a Digital Video Disc Read Only Memory (DVD-ROM), or other optical media). In these cases, each driver may be connected to the bus 18 via one or more data medium interfaces. The memory 28 may include at least one program product, which has a set of (for example, at least one) program modules configured to perform the functions of the embodiments of the present disclosure.

A program/application 40 having a set of (at least one) program modules 42 may be stored in memory 28. The program modules 42 may include, but are not limit to, operating systems, one or more application programs, other program modules, and program data, and any one or combination of above examples may include an implementation in a network environment. The program modules 42 are generally configured to implement functions and/or methods described in the embodiments of the present disclosure.

The device 12 may be in communication with one or more external devices 14 (e.g., a keyboard, a pointing device, a display 24, etc.), and may also be in communication with one or more devices that enables a user to interact with the computer device 12 and/or any device (e.g., a network card, a modem, and etc.) that enables the computer device 12 to communicate with one or more other computing devices. This kind of communication can be achieved through an input/output (I/O) interface 22. In addition, the computer device 12 may be connected to and in communication with one or more networks such as a local area network (LAN), a wide area network (WAN), and/or a public network such as the Internet through a network adapter 20. As illustrated in the figure, the network adapter 20 is in communication with other modules of the computer device 12 via the bus 18. It should be understood that, although not illustrated in FIG. 15, the computer device 12 may be used in combination with other hardware and/or software modules, which include, not are not limited to, microcode, device drivers, redundant processing units, external disk drive arrays, Redundant Arrays of Independent Disks (RAID) systems, tape drives, as well as data backup storage systems, and the like.

The processing unit 16 can run programs stored in the system memory 28 to implement various functional applications and data processing by running programs stored in the system memory 28, for example, to perform the obstacle position correction method provided by the embodiments of the present disclosure.

That is, the program, when executed by the processing unit, implements the following steps. In the process of searching for the parking space, the target parking space into which the vehicle is to be parked and the obstacle line segment in front of the target parking space are determined. The region of interest is established around the obstacle line segment. In the parking process, it is constantly detected by the ultrasonic detection device whether the obstacle exists in the front lateral side of the vehicle. When the obstacle exists in the front lateral side of the vehicle, the obstacle point is generated and the region of interest is traversed to find the obstacle line segment closest to the ultrasonic detection device as the reference line of the obstacle point. The included angle between the first connecting line and the second connecting line is calculated by taking the connecting line between the ultrasonic detection device and the obstacle point as the first connecting line and taking the connecting line between the ultrasonic detection device and the foot point of the ultrasonic detection device on the reference line as the second connecting line. It is determined whether the included angle is greater than or equal to the maximum beam angle of the ultrasonic detection device. The maximum beam angle is determined as the rotation angle when the included angle is greater than or equal to the maximum beam angle of the ultrasonic detection device; or otherwise, the included angle is determined as the rotation angle. The rotation point is determined by rotating the obstacle point by the rotation angle in such a manner that the position of the ultrasonic detection device serves as the center of the circle and the length of the first connecting line serves as the radius. It is determined whether the connecting line between the obstacle point and the rotation point has the intersection point with the reference line. The obstacle point is replaced with the intersection point as the position point of the obstacle when the connecting line between the obstacle point and the rotation point has the intersection point with the reference line; or otherwise, the obstacle point is replaced with the rotation point as the position point of the obstacle.

An embodiment of the present disclosure provides a computer-readable storage medium including computer executable instructions stored thereon. The instructions, when executed by a processor, implement the obstacle position correction method provided by any one of the embodiments of the present disclosure.

That is, the computer executable instructions, when executed by the processor, implement the following steps. In the process of searching for the parking space, the target parking space into which the vehicle is to be parked and the obstacle line segment in front of the target parking space are determined. The region of interest is established around the obstacle line segment. In the parking process, it is constantly detected by the ultrasonic detection device whether the obstacle exists in the front lateral side of the vehicle. When the obstacle exists in the front lateral side of the vehicle, the obstacle point is generated and the region of interest is traversed to find the obstacle line segment closest to the ultrasonic detection device as the reference line of the obstacle point. The included angle between the first connecting line and the second connecting line is calculated by taking the connecting line between the ultrasonic detection device and the obstacle point as the first connecting line and taking the connecting line between the ultrasonic detection device and the foot point of the ultrasonic detection device on the reference line as the second connecting line. It is determined whether the included angle is greater than or equal to the maximum beam angle of the ultrasonic detection device. The maximum beam angle is determined as the rotation angle when the included angle is greater than or equal to the maximum beam angle of the ultrasonic detection device; or otherwise, the included angle is determined as the rotation angle. The rotation point is determined by rotating the obstacle point by the rotation angle in such a manner that the position of the ultrasonic detection device serves as the center of the circle and the length of the first connecting line serves as the radius. It is determined whether the connecting line between the obstacle point and the rotation point has the intersection point with the reference line. The obstacle point is replaced with the intersection point as the position point of the obstacle when the connecting line between the obstacle point and the rotation point has the intersection point with the reference line; or otherwise, the obstacle point is replaced with the rotation point as the position point of the obstacle.

The above storage medium including the computer executable instructions may adopt any combination of one or more computer readable media. The computer readable medium may be a computer readable signal medium or a computer readable storage medium. The computer readable storage medium may be, but not limited to, an electrical, magnetic, optical, electromagnetic, infrared, or semiconductor system, apparatus, device, component or any combination thereof. The specific examples of the computer readable storage media include, but are not limited to, an electrical connection having one or more wires, a portable computer disk, a hard disk, a Random Access Memory (RAM), a Read Only Memory (ROM), an Erasable Programmable Read Only Memory (EPROM) or a flash memory, an optical fiber, a Compact Disc Read Only Memory (CD-ROM), an optical memory component, a magnetic memory component, or any suitable combination thereof. In context, the computer readable storage medium may be any tangible medium including or storing programs. The programs may be used by an instruction executed system, apparatus or device, or a connection thereof.

The computer readable signal medium may include a data signal propagating in baseband or as part of carrier which carries a computer readable program codes. Such propagated data signal may be in many forms, including, but not limited to, an electromagnetic signal, an optical signal, or any suitable combination thereof. The computer readable signal medium may also be any computer readable medium other than the computer readable storage medium, which may send, propagate, or transport programs used by an instruction executed system, apparatus or device, or a connection thereof.

The program code stored on the computer readable medium may be transmitted using any appropriate medium, including but not limited to wireless, wireline, optical fiber cable, Radio Frequency (RF), or any suitable combinations thereof.

The computer program code for carrying out operations of the embodiments of the present disclosure may be written in one or more programming languages. The programming languages include an object-oriented programming language, such as Java, Smalltalk, C++, as well as conventional procedural programming language, such as "C" language or similar programming language. The program code may be entirely executed on a user's computer, partly executed on the user's computer, as a separate software package, executed partly on the user's computer and partly on a remote computer, or entirely executed on the remote computer or server. In a case involving the remote computer, the remote computer may be connected to the user's computer through any kind of network, including LAN or WAN; or the remote computer may be connected to an external computer, for example, through the Internet provided by an Internet service provider.

It should be noted that, the above are only preferred embodiments and applied technical principles of the present disclosure. Those skilled in the art should understand that, the present disclosure is not limited to the specific embodiments described herein, and those skilled in the art can make various obvious changes, readjustments and substitutions without departing from the scope of the present disclosure. Therefore, although the present disclosure has been described in detail by means of the above embodiments, the present disclosure is not limited to the above embodiments. The present disclosure can include more other equivalent embodiments without departing from the concept of the present disclosure, and the scope of the present disclosure is determined by the scope of the appended claims.

## Claims

1. An obstacle position correction method, comprising:
determining, in a process of searching for a parking space, a target parking space into which a vehicle is to be parked and an obstacle line segment in front of the target parking space;
establishing a region of interest around the obstacle line segment;
constantly detecting, by an ultrasonic detection device, whether an obstacle exists in a front lateral side of the vehicle in a parking process;
generating, when the obstacle exists in the front lateral side of the vehicle, an obstacle point and traversing the region of interest to find an obstacle line segment closest to the ultrasonic detection device as a reference line of the obstacle point;
calculating an included angle between a first connecting line and a second connecting line, wherein the first connecting line is a connecting line between the ultrasonic detection device and the obstacle point, and the second connecting line is a connecting line between the ultrasonic detection device and a foot point of the ultrasonic detection device on the reference line;
determining whether the included angle is greater than or equal to a maximum beam angle of the ultrasonic detection device;
determining the maximum beam angle as a rotation angle when the included angle is greater than or equal to the maximum beam angle of the ultrasonic detection device; or otherwise, determining the included angle as the rotation angle;
determining a rotation point by rotating the obstacle point by the rotation angle with a position of the ultrasonic detection device being a center of a circle and a length of the first connecting line being a radius;
determining whether a connecting line between the obstacle point and the rotation point has an intersection point with the reference line; and
replacing the obstacle point with the intersection point as a position point of the obstacle when the connecting line between the obstacle point and the rotation point has the intersection point with the reference line; or otherwise, replacing the obstacle point with the rotation point as the position point of the obstacle.

2. The obstacle position correction method according to claim 1, wherein said determining, in the process of searching for the parking space, the target parking space into which the vehicle is to be parked and the obstacle line segment in front of the target parking space comprises:
detecting whether an unoccupied parking space is available in the process of searching for the parking space;
determining, when the unoccupied parking space is available, the unoccupied parking space as the target parking space into which the vehicle is to be parked, and detecting whether an obstacle exists in front of the target parking space; and
abstracting an outline of the detected obstacle into the obstacle line segment when the obstacle exists in front of the target parking space.

3. The obstacle position correction method according to claim 1, wherein said generating the obstacle point and traversing the region of interest to find the obstacle line segment closest to the ultrasonic detection device as the reference line of the obstacle point comprises:
generating the obstacle point and determining whether the obstacle point meets a correction condition; and
traversing, when the obstacle point meets the correction condition, the region of interest to find the obstacle line segment closest to the ultrasonic detection device as the reference line of the obstacle point.

4. The obstacle position correction method according to claim 3, wherein said generating the obstacle point and determining whether the obstacle point meets the correction condition comprises:
generating the obstacle point, and determining a horizontal line on which an obstacle line segment closest to the target parking space in the region of interest is located as a guiding line;
determining whether a distance between the obstacle point and the guiding line is smaller than a first distance threshold; and
determining that the obstacle point meets the correction condition when the distance between the obstacle point and the guiding line is smaller than the first distance threshold; or otherwise, determining that the obstacle point does not meet the correction condition.

5. The obstacle position correction method according to claim 3, wherein said generating the obstacle point and determining whether the obstacle point meets the correction condition comprises:
generating the obstacle point, and detecting whether a distance between the obstacle point and the target parking space is greater than a second distance threshold; and
determining that the obstacle point meets the correction condition when the distance between the obstacle point and the target parking space is greater than the second distance threshold, or otherwise, determining that the obstacle point does not meet the correction condition.

6. An obstacle position correction system, comprising:
a parking space determining module configured to determine, in a process of searching for a parking space, a target parking space into which a vehicle is to be parked and an obstacle line segment in front of the target parking space;
a region establishing module configured to establish a region of interest around the obstacle line segment;
an obstacle detection module configured to constantly detect, by using an ultrasonic detection device, whether an obstacle exists in a front lateral side of the vehicle in a parking process;
a reference line determining module configured to generate, when the obstacle exists in the front lateral side of the vehicle, an obstacle point and traverse the region of interest to find an obstacle line segment closest to the ultrasonic detection device as a reference line of the obstacle point;
an included angle calculation module configured to calculate an included angle between a first connecting line and a second connecting line, wherein the first connecting line is a connecting line between the ultrasonic detection device and the obstacle point, and the second connecting line is a connecting line between the ultrasonic detection device and a foot point of the ultrasonic detection device on the reference line;
an included angle determining module configured to determine whether the included angle is greater than or equal to a maximum beam angle of the ultrasonic detection device;
an angle determining module configured to determine the maximum beam angle as a rotation angle when the included angle is greater than or equal to the maximum beam angle of the ultrasonic detection device; or otherwise, determine the included angle as the rotation angle;
a rotation point determining module configured to determine a rotation point by rotating the obstacle point by the rotation angle with a position of the ultrasonic detection device being a center of a circle and a length of the first connecting line being a radius;
an intersection point determining module configured to determine whether a connecting line between the obstacle point and the rotation point has an intersection point with the reference line; and
a position point determining module configured to replace the obstacle point with the intersection point as a position point of the obstacle when the connecting line between the obstacle point and the rotation point has the intersection point with the reference line; or otherwise, replace the obstacle point with the rotation point as the position point of the obstacle.

7. The obstacle position correction system according to claim 6, wherein the parking space determining module is configured to:
detect whether an unoccupied parking space is available in the process of searching for the parking space;
determine, when the unoccupied parking space is available, the unoccupied parking space as the target parking space into which the vehicle is to be parked, and detect whether an obstacle exists in front of the target parking space; and
abstract an outline of the detected obstacle into the obstacle line segment when the obstacle exists in front of the target parking space.

8. The obstacle position correction system according to claim 6, wherein the reference line determining module comprises:
a condition determining unit configured to generate the obstacle point and determine whether the obstacle point meets a correction condition; and
a reference line determining unit configured to traverse the region of interest to find the obstacle line segment closest to the ultrasonic detection device as the reference line of the obstacle point when the obstacle point meets the correction condition.

9. The obstacle position correction system according to claim 8, wherein the condition determining unit is configured to:
generate the obstacle point, and determine a horizontal line on which an obstacle line segment closest to the target parking space in the region of interest is located as a guiding line;
determine whether a distance between the obstacle point and the guiding line is smaller than a first distance threshold; and
determine that the obstacle point meets the correction condition when the distance between the obstacle point and the guiding line is smaller than the first distance threshold; or otherwise, determine that the obstacle point does not meet the correction condition.

10. The obstacle position correction system according to claim 8, wherein the condition determining unit is configured to:
generate the obstacle point, and detect whether a distance between the obstacle point and the target parking space is greater than a second distance threshold; and
determine that the obstacle point meets the correction condition when the distance between the obstacle point and the target parking space is greater than the second distance threshold, or otherwise, determine that the obstacle point does not meet the correction condition.

11. A computer device, comprising a processor, and a memory having a computer program stored thereon, wherein the computer program, when executed by the processor, implements the obstacle position correction method according to any one of claims 1 to 5.

12. A storage medium, comprising computer executable instructions, wherein the computer executable instructions, when executed by the processor, implement the obstacle position correction method according to any one of claims 1 to 5.
